# EUROPÄISCHE PATENTSCHRIFT

(11) **EP 2 278 173 B1**
(45) Veröffentlichungstag und Bekanntmachung des Hinweises auf die Patenterteilung: **21.06.2017**
(21) Anmeldenummer: 10450107.7
(22) Anmeldetag: 23.06.2010
(51) Int. Cl.: F16B 13/00, E04F 13/08, E04F 13/04, F16L 5/00, F16L 59/12, E04B 1/76, F16B 5/06

(54) **Befestigungsmittel zur Anbringung von Außenelementen auf einer mit einer Außenwandisolierung versehenen festen Wand**
Mounting device for attaching external elements to a solid wall comprising external wall insulation
Moyen de fixation pour l'application d'éléments extérieurs sur une paroi fixe dotée d'une isolation de paroi extérieure

(30) Priorität: 26.06.2009 AT 9992009
(43) Veröffentlichungstag der Anmeldung: 26.01.2011
(73) Patentinhaber: Ing. Alois Mitterhuber GesmbH, 4470 Enns (AT)
(72) Erfinder: Mitterhuber, Alois, Ing., 4470 Enns (AT)
(74) Vertreter: Patentanwaltskanzlei Hübscher

(56) Entgegenhaltungen:
- EP-A2- 0 921 252
- EP-A2- 1 780 456
- CH-A5- 666 310
- GB-A- 2 444 385

## Beschreibung

Die Erfindung betrifft Befestigungsmittel zur Anbringung von Außenelementen, z. B. Hausnummern, Briefkästen, Klingeln und Gegensprechanlagen, auf einer mit einer Außenwandisolierung versehenen festen Wand eines Bauwerkes, bestehend aus einen mit einem Flansch an der festen Wand befestigbaren, in die Isolierung einragenden Träger, der mit einer einen in die Isolierung einragenden Fortsatz aufweisenden Außenstütze für das jeweilige Außenelement über eine Schraubverbindung kuppelbar ist.

Bei derartigen Bauwerken besteht die feste Wand beispielsweise aus Ziegeln, Beton oder auch in Sonderfällen aus Holz. Besonders bei aus empfindlichem Material, z. B. Styropor hergestellten, normalerweise mit einem Außenputz versehenen Isolierungen, führt bisher eine nachträgliche Anbringung von Außenelementen zu Beschädigungen, die die Isolierwirkung beeinträchtigen und nachträgliche Ausbesserungsarbeiten erfordern, da größere Öffnungen in der Isolierung hergestellt werden müssen. Zur Vermeidung dieser Nachteile wurde in der EP 1 482 188 A2 ein neues Befestigungsmittel der eingangs genannten Art vorgeschlagen. Bei dieser nun bekannten Ausführung ist der am Flansch vorgesehene Träger als fest angebrachtes Rohrstück ausgeführt, das ein mit Einrastnoppen versehenes Ende eines rohrförmigen Verbindungselementes aus Kunststoff aufnimmt, an dem im anderen Endbereich ein Ansatz aus Metall gehalten ist, wobei ein diesen Ansatz mit dem Rohrstück verbindender Einsteckteil durch den Ansatz herausgeführt ist, sodass er beim Auftragen eines Außenputzes die Anbringungsstelle des Befestigungsmittels bezeichnet. Dieser herausgeführte Teil wird nach dem Anbringen des Außenputzes abgeschnitten oder abgebrochen und nimmt das Ende einer Befestigungsschraube für das jeweils vorzusehende Außenelement auf. Grundidee bei dieser bekannten Konstruktion ist es, zwischen der Außenbefestigung und dem Innenträger einen Teil aus wärmeisolierenden Material vorzusehen und dadurch Wärmebrücken durch die Isolierschicht zu vermeiden. Nach einer Variante kann anstelle des Flansches auch eine mit einer Schraube verbundene Endplatte für den rohrförmigen Ansatz vorgesehen werden. Das Aufsuchen der Befestigungsstelle an der Putzaußenseite ist mühsam, bedingt bei der Abnahme der erwähnten Verlängerung manchmal Beschädigungen und macht überdies erst die gesonderte Verschraubung mit dem anzubringenden Teil notwendig.

Zu erwähnen ist, dass für die abstandsweise Befestigung von Latten, Profilen, Platten u. dgl. an einem festen Grund gemäß der EP 0 921 252 A2 auch Ausführungen bekannt sind, bei denen vor der Anbringung einer Isolierung eine zweiteilige Schraube angebracht wird, von dem der eine Teil als Spreizschraube für einen Dübel dient und der andere Teil einen herausragenden Träger für eine aufschraubbare Mutter bildet, die Bestandteil z. B. einer Tragschiene oder eines sonstigen zu befestigenden Teiles sein kann.

Eine ähnliche Ausführung ist auch für die Befestigung einer Fassadenverkleidungsunterkonstruktion an einer Gebäudewand aus der DE 31 27 736 A1 bekannt. Der zu befestigende Teil kann dabei eine Gewindehülse tragen, deren Innengewinde mit einem Außengewinde der am festen Gebäudeteil befestigten Doppelschraube eine Abstandseinstellung des zu befestigenden Teiles von der festen Wand ermöglichen soll, konstruktiv aber aufwendig ist, wobei sich bei einer zu befestigenden Profilschiene die Notwendigkeit ergibt, die Schiene ihrerseits drehbar, aber unverlierbar mit der Gewindehülse zu verbinden.

Aufgabe der Erfindung ist es, ein Befestigungsmittel der eingangs genannten Art dahingehend zu verbessern, dass mit möglichst wenigen Arbeitsschritten bei seiner Anbringung das Auslangen gefunden wird, eine Anpassung an verschiedene Dicken der Außenwandisolierung problemlos möglich ist und eine saubere Anbringungsstelle für das jeweilige Außenelement gewährleistet wird.

Die gestellte Aufgabe wird prinzipiell dadurch gelöst, dass die Außenstütze aus einer in die Isolierung versenkbaren Montageplatte besteht, der rohrförmige Träger als nipppelartiger, mit einem Gewinde versehener Ansatz des Flansches ausgebildet ist und die Außenstütze ebenfalls mit einem rohrförmigen Gewindeansatz versehen ist der bei je ein Einschraubgewinde aufweisenden Gewindeansätzen von Flansch und Montageplatte über ein in diese mit Gegengewinden versehenes eingeschraubtes Zwischenstück verbindbar ist.

Mittels der Montageplatte kann die Isolierung zusätzlich befestigt werden, wobei trotzdem in weiterer Folge bei Anbringung eines Außenputzes keine Störungen in der Gesamtansicht auftreten. Durch die Gewindeansätze und das allenfalls vorgesehene Zwischenstück ist eine genaue Anpassung an die Dicke der Isolierschicht bzw. an den erwünschten Anlagedruck der Montageplatte an der Isolierung möglich. Durch entsprechende Materialwahl können, wie an sich auch bei der bekannten Ausführung, Wärmebrücken vermieden werden.

Erfindungsgemäß ist das Zwischenstück als Isolierrohr für über Eintrittsöffnungen in ihm selbst und bzw. oder im Träger und der Außenstütze vorgesehene Öffnungen ein- bzw. durchführbare Kabel bzw. sonstige elektrische Leitungsträger ausgebildet. Ferner kann man bei durchgehender Öffnung im Träger bzw. im Bedarfsfall auch in der Außenstütze die Öffnungen von Rohr, Träger und gegebenenfalls Außenstütze als Bohrlehre bei der Anbringung von Durchtrittsöffnungen in der festen Wand des Bauwerkes einsetzen und so die Gesamtmontage erleichtern.

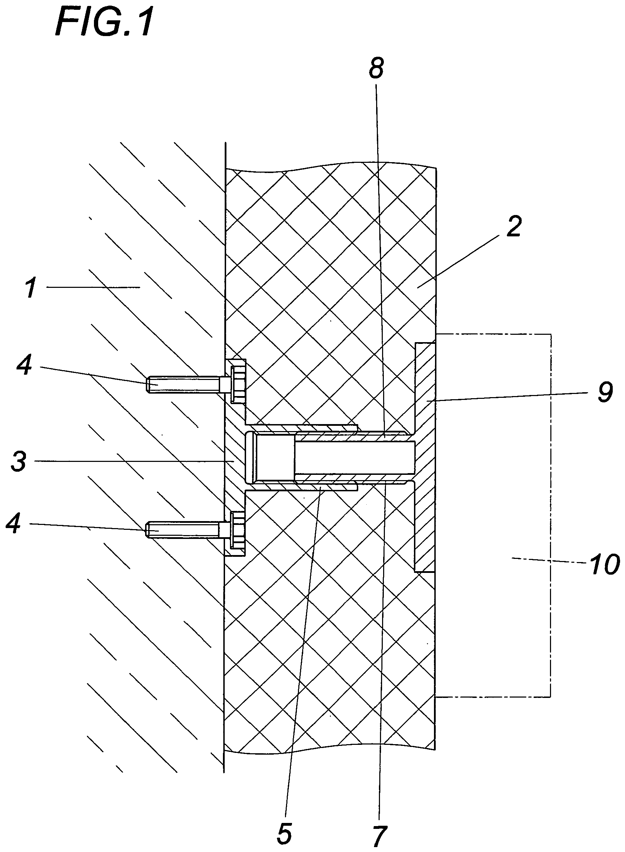

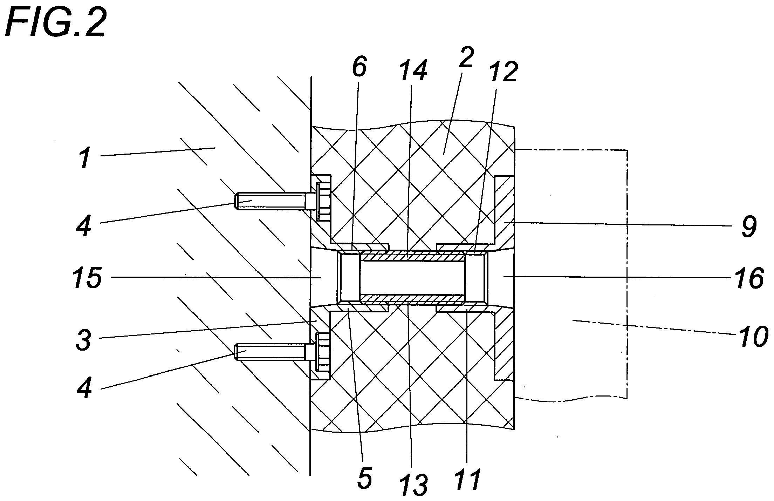

In der Fig. 1 und 2 der Zeichnung sind zwei Ausführungen des Erfindungsgegenstandes gezeigt. Als Ausführungsbeispiel ist jeweils ein Teilstück einer Wand 1 mit Außenisolierung 2 und einem Befestigungsmittel schematisch im Schnitt veranschaulicht.

Nach Fig. 1 ist auf einer z. B. aus Ziegeln gefertigten Wand eine Isolierung 2 aus einem empfindlichen Material, z. B. Styropor, anzubringen. Vorzugsweise vor der Anbringung dieser Isolierung 2 und eines allfällig vorgesehenen Außenputzes wird an der Wand 1 ein im Schnitt dargestellter Flansch 3 mit Schrauben 4 befestigt. Von dem Flansch 3 geht beim Ausführungsbeispiel ein rohrförmiger Träger 5 aus, der wenigstens zum Teil in die Isolierung 2 einragt und mit einem Gewinde 6 versehen ist. Während der Anbringung der Isolierung 2 kann in den Träger 5 ein Leitstück eingesetzt werden, das durch die gesamte Isolierung 2 herausragt und so das Auffinden der Befestigungsstelle erleichtert.

Nach Anbringung der Isolierung wird in den rohrförmigen Träger 5 ein ebenfalls rohrförmiger und mit einem Gewinde 7 versehener Fortsatz 8 einer als Außenstütze dienende Montageplatte 9 eingeschraubt, sodass Toleranzen in der Dicke der Isolierschicht 2 ausgeglichen werden können. Strichpunktiert wurde ein Außenelement 10 angedeutet, das vorzugsweise ebenfalls mit Schrauben oder gegebenenfalls mit zusammenwirkenden Verrastungen an der Montageplatte 9 befestigt werden kann.

In Fig. 2 wurden für gleiche Teile die gleichen Bezugszeichen wie in Fig. 1 verwendet. Die Außenstütze und der Flansch 3 können gleich ausgebildet und mit Öffnungen 15, 16 versehen sein, wobei nicht nur der Flansch 3 einen nippelartigen Träger 5 mit Gewinden 6 aufweist, sondern auch an der Außenstütze ein solcher Ansatz 11 mit Gewinde 12 vorgesehen wird und für die Verbindung von Flansch 3 und Außenstütze ein rohrförmiges Zwischenstück 14 mit Außengewinde 13 eingesetzt wird.

## Patentansprüche

1. Befestigungsmittel zur Anbringung von Außenelementen (10), z. B. Hausnummern, Briefkästen, Klingeln und Gegensprechanlagen, auf einer mit einer Außenwandisolierung (2) versehenen festen Wand (1) eines Bauwerkes, bestehend aus einen mit einem Flansch (3) an der festen Wand (1) befestigbaren, in die Isolierung (2) einragenden Träger (5), der mit einer einen in die Isolierung einragenden Fortsatz aufweisenden Außenstütze für das jeweilige Außenelement über eine Schraubverbindung kuppelbar ist, wobei die Außenstütze aus einer in die Isolierung (2) versenkbaren Montageplatte (9) besteht, der rohrförmige Träger (5) als nipppelartiger, mit einem Gewinde (6) versehener Ansatz des Flansches (3) ausgebildet ist und die Außenstütze ebenfalls mit einem rohrförmigen Gewindeansatz (8 bzw. 11) versehen ist, **dadurch gekennzeichnet, dass** der Gewindeansatz (8 bzw. 11) bei je ein Einschraubgewinde (6, 7) aufweisenden Gewindeansätzen von Flansch und Montageplatte (9) über ein in diese mit Gegengewinden versehenes eingeschraubtes Zwischenstück (14) verbindbar ist und dass das Zwischenstück (14) als Isolierrohr für über Eintrittsöffnungen (15, 16) in ihm selbst und bzw. oder im Träger (5) und der Außenstütze vorgesehene Öffnungen (15, 16) ein- bzw. durchführbare Kabel bzw. sonstige elektrische Leitungsträger ausgebildet ist.

## Claims

1. Fastening means for mounting external elements (10), e.g. house numbers, letter boxes, door bells and intercom systems, to a solid wall (1) of a building provided with an external wall insulation (2), consisting of a carrier (5) which can be fastened to the solid wall (1) by means of a flange (3), protrudes into the insulation (2) and can be coupled to an external support for the respective external element via a screw connection, said external support comprising an extension protruding into the insulation, wherein the external support consists of a mounting plate (9) which can be countersunk into the insulation (2), the tubular carrier (5) is formed as a nipple-like projection of the flange (3) provided with a thread (6), and the external support is likewise provided with a tubular threaded projection (8 or 11), **characterised in that** the threaded projection (8 or 11) can be connected, in the case of threaded projections of the flange and mounting plate (9) each comprising a screw-in thread (6, 7), via an intermediate piece (14) screwed therein and provided with counter-threads, and **in that** the intermediate piece (14) is formed as an insulation tube for cables or other electrical wire carriers, which can be inserted therein or therethrough via inlet openings (15, 16) in itself and/or openings (15, 16) provided in the carrier (5) and the external support.

## Revendications

1. Moyen de fixation permettant d'installer des éléments extérieurs (10), par exemple des numéros de rue, des boîtes aux lettres, des sonnettes et des interphones, sur un mur fixe (1), pourvu d'une isolation (2) de mur extérieur, d'un ouvrage, constitué d'un support (5) pouvant être fixé sur le mur fixe (1) avec une bride (3) et pénétrant dans l'isolation (2), qui peut être accouplé par le biais d'un raccord à vis à un support extérieur, présentant un prolongement pénétrant dans l'isolation, pour l'élément extérieur respectif, le support extérieur étant constitué d'une plaque de montage (9) pouvant être encastrée dans l'isolation (2), le support tubulaire (5) étant réalisé en tant qu'appendice, possédant une forme de téton et pourvu d'un filetage (6), de la bride (3), et le support extérieur étant également pourvu d'un appendice fileté tubulaire (8 ou 11), **caractérisé en ce que** l'appendice fileté (8) peut être relié aux appendices filetés de la bride et de la plaque de montage (9), comportant respectivement un filetage de vissage (6, 7), par un élément intermédiaire(14) pourvu de filetages antagonistes, et **en ce que** l'élément intermédiaire (14) est réalisé en tant que tube isolant pour un câble ou centre support de ligne électrique pouvant traverser en lui-même les ouvertures d'entrée (15, 16) ou les ouvertures (15, 16) prévues dans la bride ou dans le support extérieur.
